# EUROPEAN PATENT SPECIFICATION

(11) **EP 2 559 538 B1**
(45) Date of publication and mention of the grant of the patent: **06.03.2019**
(21) Application number: 11768778.0
(22) Date of filing: 07.04.2011
(51) Int. Cl.: B29C 43/46, B29C 43/24, B29L 7/00

(54) **CALENDER**
KALENDER
CALANDRE

(30) Priority: 13.04.2010 JP 2010092493
(43) Date of publication of application: 20.02.2013
(73) Proprietor: IHI Corporation, Tokyo 135-8710 (JP); IHI Logistics & Machinery Corporation, Koto-ku Tokyo 135-0061 (JP)
(72) Inventor: IMAIZUMI, Hiroaki, Tokyo 135-8710 (JP); MAEDA, Hirotomo, Tokyo 108-0075 (JP)
(74) Representative: Grünecker Patent- und Rechtsanwälte PartG mbB
(86) International application number: PCT/JP2011/058789
(87) International publication number: WO 2011/129257

(56) References cited:
- DE-A1- 4 042 122
- JP-A- 3 128 215
- JP-A- 63 197 614
- JP-A- 2004 160 764
- JP-A- 2004 160 764
- JP-A- 2010 053 298
- JP-B- 47 029 584
- JP-B- 49 044 586
- JP-B1- S4 729 584

## Description

### Technical Field

The present invention relates to a calender which forms a resin film from a thermoplastic resin material such as plastic or rubber.

### Background Art

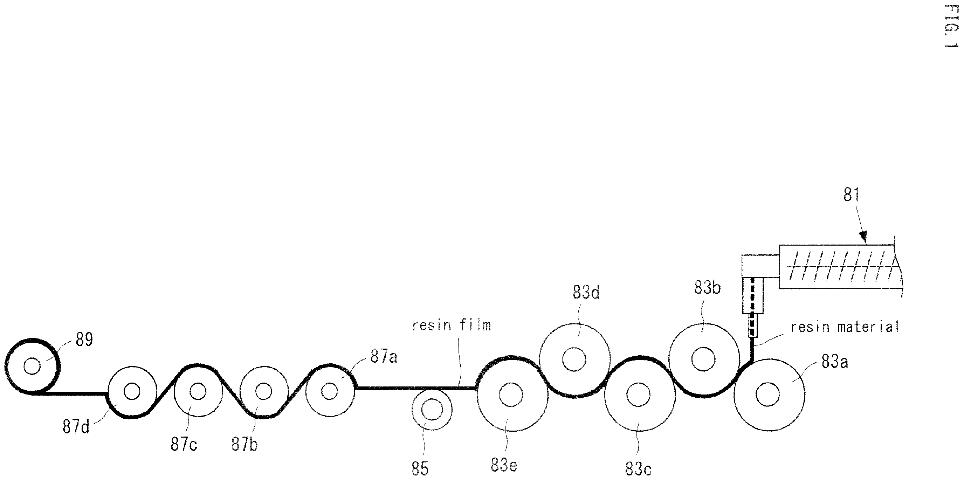

As illustrated in Fig. 1, a calender includes a continuous kneader 81, a plurality of (five in example of Fig. 1) rolling rolls 83a, 83b, 83c, 83d, and 83e, a take-off roll 85, a plurality of (four in example of Fig. 1) cooling rolls 87a, 87b, 87c, and 87d, a winding roll 89, and the like.

A molten resin material is supplied to the continuous kneader 81. The resin material is kneaded by the continuous kneader 81 and supplied between a first rolling roll 83a and a second rolling roll 83b. Thereafter, the resin material is rolled between the first and the second rolling rolls 83a and 83b, subsequently, is rolled between the second rolling roll 83b and a third rolling roll 83c, is rolled between the third rolling roll 83c and a fourth rolling roll 83d, is rolled between the fourth rolling roll 83d and a fifth rolling roll 83e, and is formed a resin film. The resin film is separated from the fifth rolling roll 83e by the take-off roll 85 and is transferred to first to fourth cooling rolls 87a, 87b, 87c, and 87d. In the first to the fourth cooling rolls 87a, 87b, 87c, and 87d, the resin film passing through the cooling rolls is cooled by a cooling medium which flows inside of the cooling rolls. The resin film which is cooled in this way is wound around the winding roll 89.

For example, the above-described calender is described in Patent Literatures 1 and 2 below.

### Citation List

### Patent Literature

PTL 1: Japanese Patent No. 2781836
PTL 2: Japanese Patent No. 3968879

JP 2004 160764 A relates to an electrolyte film forming apparatus. JP 47 029584 B relates to a cooling column.

DE3802095 discloses a calender for calibrating, smoothing and cooling of extruded films. The calender comprises an extruder , a first roll unit, a second roll unit and a take-off roll. The first roll unit is positioned further upward than the second roll unit with respect to a vertical direction.

### Summary of Invention

### Technical Problem

However, in the configuration like Fig. 1, since the plurality of rolling rolls, the take-off roll, the plurality of cooling rolls, and the winding roll are disposed in substantially one row, the entire length of the calender is increased. For example, the entire length of the calender becomes 7 to 9 m.

Therefore, an object of the present invention is to decrease the entire length of the calender.

### Solution to Problem

In order to achieve the object, according to the present invention, there is provided a calender which forms a resin film from a resin material as defined in claim 1. Preferred embodiments are disclosed in the dependent claims.

According to a preferred embodiment of the present invention, the extrusion unit includes a material supply port to which the resin material is supplied,
the extrusion unit is disposed above the first roll unit,
the resin material is kneaded by the extrusion unit after being supplied to the material supply port, subsequently, the resin material is pressurized by the first roll unit, thereafter, the resin material is rolled by the second roll unit, to the resin film, and is transferred to the rear side.

The first roll unit and the second roll unit may partially overlap with each other in up and down direction.

### Advantageous Effect of the Invention

According to above-described present invention, the resin material is formed the resin film during the process of being transferred from the rear side to the front side and transferred to the rear side so as to U-turn. That is, the resin material is pressurized by the first roll unit, subsequently, the resin material is rolled by the second roll unit which is positioned further forward than the first roll unit to the resin film. Thereafter, the resin film is wound around the winding roll which is positioned further rearward than the second roll unit. In this way, since the resin material is transferred so as to U-turn, the entire length (dimension in front and rear directions) of the calender is able to be decreased.

### Brief Description of Drawings

Fig. 1 illustrates a configuration of a calender in the related art.
Fig. 2 illustrates a calender according to an embodiment of the present invention.
Fig. 3 is a cross-sectional view when viewed from an arrow III-III of Fig. 2.
Fig. 4(A) is a view when viewed from an arrow IVA-IVA of Fig. 2.
Fig 4(B) is a view when viewed from an arrow B-B of Fig. 4(A).
Fig. 5 is a configuration diagram of an induction heating roll device which is applied to rolling rolls.
Fig. 6 is a cross-sectional view when viewed from an arrow VI-VI of Fig. 5.
Fig. 7 illustrates a frame structure of the calender.
Fig. 8 is a modification of the calender of the present invention.
Fig. 9 is a view when viewed from an arrow IX-IX of Fig. 8.

### Description of Embodiments

A preferred embodiment of the present invention will be described with reference to the drawings. Moreover, in the drawings, the common portions are denoted by the same reference numerals, and the overlapping descriptions are omitted.

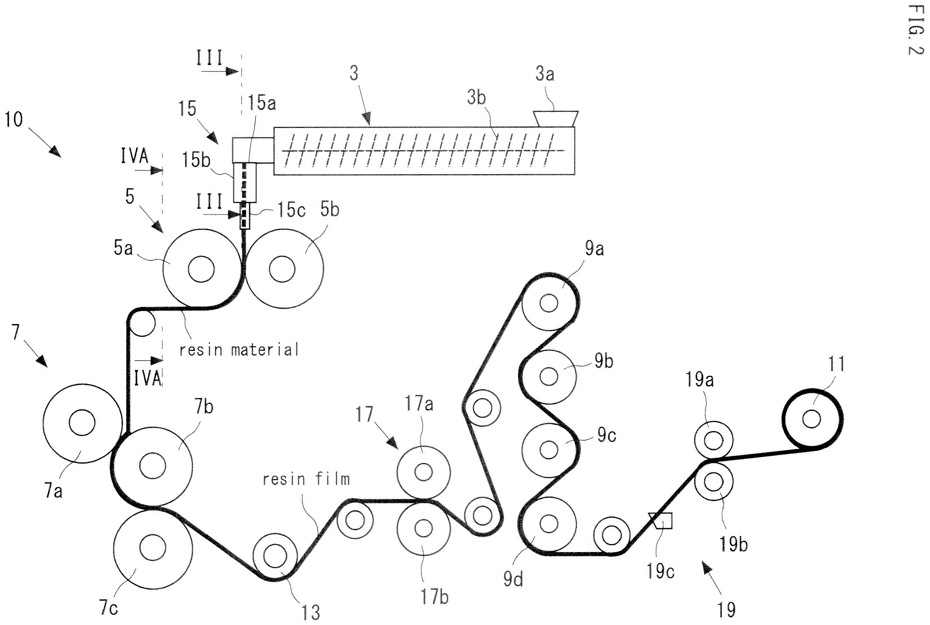

Fig. 2 is a configuration diagram of a calender 10 according to the embodiment of the present invention. The calender 10 is a device which forms a resin film from a resin material such as plastic or rubber. The calender 10 includes an extrusion unit 3, a first roll unit 5, a second roll unit 7, a plurality of cooling rolls 9a, 9b, 9c, and 9d, and a winding roll 11.

A molten resin material is supplied to the extrusion unit 3 (continuous kneader). The extrusion unit 3 kneads the resin material and supplies the kneaded resin material to the first roll unit 5 (between rolling rolls 5a and 5b in the example of Fig. 2). The extrusion unit 3 includes a material supply port 3a to which the resin material is supplied. The extrusion unit 3 mixes or kneads the resin material supplied from the material supply port 3a while transferring the resin material from the rear side to the front side.

The extrusion unit 3 may knead and mix the resin material while transferring the resin material from the rear side to the front side by a screw 3b which is provided in the inner space of the extrusion unit. In this case, the screw 3b in which a shaft extends from the rear side (left side in Fig. 2) to the front side is rotated around an axis of the screw, and therefore, the resin material passes between spiral grooves which form the spiral screw 3b and is transferred from the rear side to the front side.

The first roll unit 5 pressurizes and rolls the resin material which is extruded from the extrusion unit 3. In this example, the first roll unit 5 includes rolling rolls 5a and 5b which are driven to rotate around axes of the rolling rolls. The resin material is supplied between the rolling rolls 5a, and 5b from the extrusion unit 3, and thereby, the resin material is pressurized and rolled between the rolling rolls 5a and 5b.

In the present embodiment, the first roll unit 5 is positioned further upward than the second roll unit 7 with respect to the vertical direction.

The second roll unit 7 rolls the resin material passing through the first roll unit 5. In this example, the second roll unit 7 includes rolling rolls 7a, 7b, and 7c which are driven to rotate around axes of the rolling rolls. The resin material is transferred to between the rolling rolls 7a and 7b from the first roll unit 5. The resin material is rolled between the rolling rolls 7a and 7b, and subsequently, is rolled between the rolling rolls 7b and 7c. The resin material passing through the second roll unit 7 is formed in a film shape by the rolling of the first and second roll units 5 and 7. In the present invention, the resin material having a film shape is referred to as a resin film.

The second roll unit 7 is positioned further forward than the first roll unit 5. In Fig. 2, the second roll unit 7 (that is, the rolling rolls 7a, 7b, and 7c or accessories thereof) is disposed so as to partially overlap with the first roll unit 5 (that is, the rolling rolls 5a and 5b or accessories thereof) in up and down directions (up and down directions in Fig. 2).

The take-off roll 13 is able to rotate around an axis of the take-off roll and separates the resin film from the second roll unit 7. In the example of Fig. 2, the take-off roll 13 separates the resin film from the rolling rolls 7c.

The plurality of cooling rolls 9a, 9b, 9c, and 9d is driven to rotate and is cooled by a cooling medium which flows inside of the cooling rolls. Each of the cooling rolls 9a, 9b, 9c, and 9d contact the resin film from the take-off roll 13, and therefore, the resin film is cooled. In Fig. 2, the plurality of cooling rolls 9a, 9b, 9c, and 9d is disposed such that the cooling rolls at least partially overlap with one another in the up and down directions in Fig. 2.

The winding roll 11 is driven to rotate around an axis of the winding roll and winds the resin film from the plurality of cooling rolls 9a, 9b, 9c, and 9d. The winding roll 11 is positioned further rearward than the second roll unit 7.

According to the present embodiment, the extrusion unit 3 is disposed on the upper step, the material supply port 3a of the extrusion unit 3 is positioned on the rear side of the upper step, the first roll unit 5 is disposed on the front side of the upper step, and the second roll unit 7 is disposed on the front side of the lower step. According to this disposition, the resin material supplied to the material supply port 3a at the rear side of the upper step is kneaded at the extrusion unit 3 in the process of being transferred to the front side, subsequently, the resin material is rolled by the first roll unit 5 which is positioned at the front side of the upper step, thereafter, the resin material is rolled by the second roll unit 7 which is positioned at the front side of the lower step, to the resin film, and is transferred to the rear side.

In this way, since the resin material is formed the resin film during the process of being transferred from the rear side to the front side and transferred to the rear side so as to U-turn, the entire length of the calender 10 is able to be decreased. Since the first roll unit 5 and the second roll unit 7 at least partially overlap with each other in the up and down directions (up and down direction in Fig. 2), the entire length of the calender 10 is able to be further decreased. For example, the entire length of the calender 10 may be approximately 2.5 m.

Moreover, in the present invention, the front side means the second roll unit 7 side in the winding roll 11 and the second roll unit 7 when viewed from the intermediate position between the winding roll 11 and the second roll unit 7 in the case where the winding roll 11 and the second roll unit 7 are disposed such that there is a space therebetween. In the example of Fig. 2, the front side means one side (left side in Fig. 2) in the horizontal direction. On the other hand, in the present invention, the rear side means the wind roll 11 side in the winding roll 11 and the second roll unit 7 when viewed from the intermediate position between the winding roll 11 and the second roll unit 7 in the case where the winding roll 11 and the second roll unit 7 are disposed such that there is a space therebetween. In the example of Fig. 2, the rear side means the other side (right side in Fig. 2) in the horizontal direction.

In addition, according to the present embodiment, the take-off roll 13 is provided at the rear side of the second roll unit 7, the plurality of cooling rolls 9a, 9b, 9c, and 9d is disposed from the upper step side to the lower step side in the rear side of the take-off roll 13, and the winding roll 11 is provided at the rear side of the plurality of cooling rolls 9a, 9b, 9c, and 9d. According to this disposition, the separating from the second roll unit 7 with respect to the resin film, the cooling thereof, and the winding thereof are able to be performed in the process in which the resin film molded from the resin material is returned from the front side to the rear side. Accordingly, even when the take-off roll 13, the cooling rolls 9a, 9b, 9c, and 9d, and the winding roll 11 are provided, the entire length of the calender 10 is able to be decreased.

According to the present embodiment, the calender 10 may further include a molding portion 15, an embossing unit 17, and a trimming unit 19.

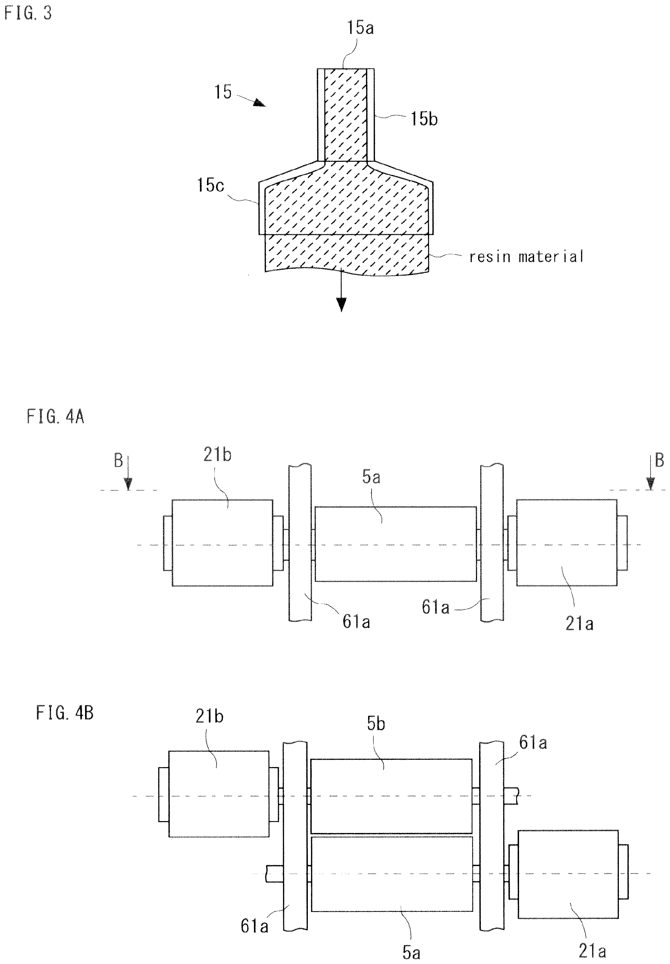

The molding portion 15 molds the resin material, which is extruded from the extrusion unit 3, in a plate shape. Fig. 3 is a cross-sectional view when viewed from an arrow III-III of Fig. 2. As illustrated in Figs. 2 and 3, the molding portion 15 includes a receiving port 15a which receives the resin material from the extrusion unit 3, a first portion 15b which extends downward from the receiving port 15a, and a second portion 15c which is connected to the lower end of the first portion 15b. The resin material from the receiving port 15a passes through internal spaces of the first portion 15b and the second portion 15c. The internal space of the second portion 15c is enlarged compared with the internal space of the first portion 15b in left and right directions of Fig. 3. However, the internal space of the second portion 15c is reduced from the internal space of the first portion 15b in a direction perpendicular to the paper surface of Fig. 3. Thereby, the resin material passing through inside the molding portion 15 is formed in a thin plate shape in the direction perpendicular to the paper surface of Fig. 3.

The embossing unit 17 includes a pair of embossing rolls 17a and 17b which are driven to rotate. A pattern having unevenness is formed on at least one outer circumferential surface of the embossing rolls 17a and 17b. Accordingly, the resin film passes between the pair of embossing rolls 17a and 17b, and the pattern of the embossing rolls 17a and 17b is imprinted to the resin film.

The trimming unit 19 includes a pair of pinch rolls 19a and 19b and a cutter 19c. By interposing the resin film between the pair of pinch rolls 19a and 19b, tension is applied to the resin film. In this state, the cutter 19c cuts into the resin film, ends in the width direction of the resin film are cut and dropped, and therefore, the width of the resin film is decreased.

In the present embodiment, adopting of configurations 1 and 2 below in order to decrease the size of the calender 10 is preferable.

### [Configuration 1]

Fig. 4(A) is a view when viewed from an arrow IVA-IVA of Fig. 2. Fig 4(B) is a view when viewed from an arrow B-B of Fig. 4(A). As illustrated in Fig. 4, preferably, motors 21a and 21b which are driven to rotate the rolling rolls 5a and 5b are directly connected in the axial direction of the rolling rolls in each of the rolling rolls 5a and 5b. The motor 21a which is directly connected to the rolling roll 5a and the motor 21b which is directly connected to the rolling roll 5b are positioned on sides opposite to each other relative to the rolling rolls 5a and 5b in the axial directions of the rolling rolls 5a and 5b so as not to interfere with each other.

Thereby, since the rolling rolls 5a and 5b each are able to be driven to rotate even without using a universal joint, the width of the calender 10 (dimension in the direction perpendicular to the paper surface of Fig. 2) is able to be suppressed. Moreover, the rolling rolls 5 and 5b are supported so as to be rotated to a frame portion 61a.

Similarly, preferably, motors which are driven to rotate the rolling rolls 7a, 7b, and 7c are directly connected in the axial direction of the rolling rolls in each of the rolling rolls 7a, 7b, and 7c. The motor which is directly connected to the rolling roll 7a and 7c and the motor which is directly connected to the rolling roll 7b are positioned on sides opposite to each other relative to the rolling rolls 7a, 7b, and 7c in the axial directions of the rolling rolls 7a, 7b, and 7c.

### [Configuration 2]

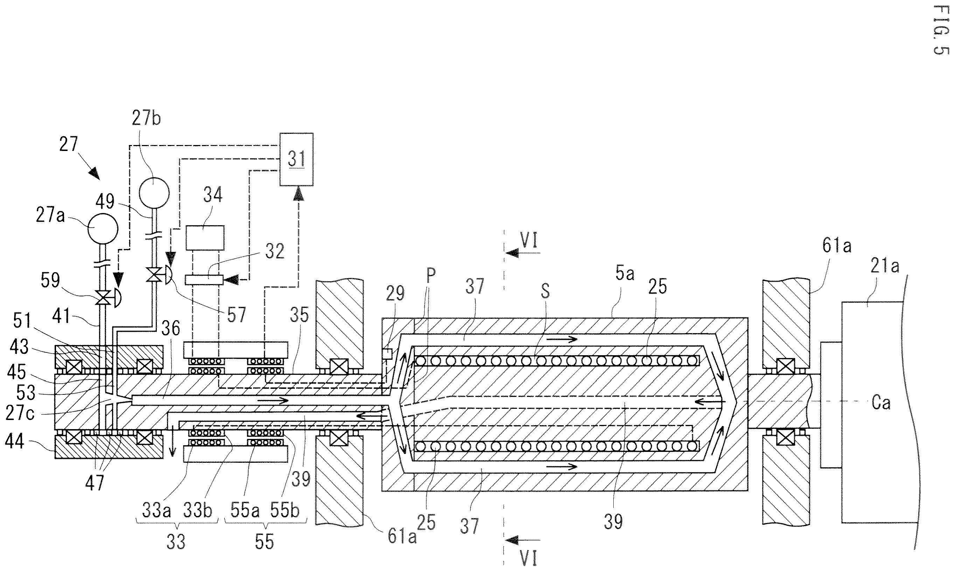

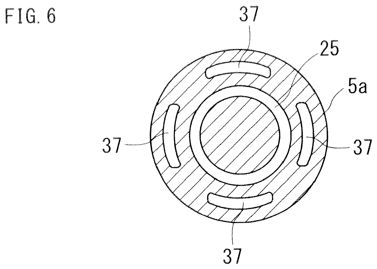

Fig. 5 illustrates a case where an induction heating roll device is applied to the rolling roll 5a. Fig. 6 is a cross-sectional view when viewed from an arrow VI-VI of Fig. 5. Hereinafter, for the sake of simplicity, only the case of the rolling roll 5a is described. However, even in the cases of other rolling rolls 5b, 7a, 7b, and 7c, similarly, the induction heating roll device may be applied.

The induction heating roll device includes the rolling roll 5a, an induction heating coil 25, a cooling medium supply device 27, a temperature sensor 29, and a control device 31.

The induction heating coil 25 is provided inside of the rolling roll 5a. By applying alternating-current voltage to the induction heating coil 25, the induction heating coil performs induction heating of the rolling roll 5a. In the example of Fig. 5, the induction heating coil 25 is disposed so as to be wound around a center axis Ca of the rolling roll 5a. In order to supply a voltage to the induction heating 25, which is positioned on the rotating side, from the stationary side in a non-contact manner, as illustrated in Fig. 5, a rotary transformer 33 is provided. The rotary transformer 33 includes a stator coil 33a which is positioned on the stationary side and a rotor coil 33b which is positioned on the rotating side, and by operation of a magnetic field between the stator coil 33a and the rotor coil 33b, the alternating-current voltage is applied to the induction heating coil 25 from a power supply 34 of the stationary side.

In addition, the rotor coil 33b is provided in a columnar extension portion 35 which is connected to the rolling roll 5a. In the example of Fig. 5, the extension portion 35 is positioned on a side opposite to the motor 21a, and the diameter of the extension portion is smaller than that of the rolling roll 5a.

Moreover, for example, the induction heating coil 25 may be disposed inside the rolling roll 5a as follows. The rolling roll 5a is divided in divided surfaces P of the end thereof. The induction heating coil 25 is disposed in the annular internal space S of the divided surfaces P. Thereafter, the divided surfaces P of the divided portions of the rolling roll are connected to each other by appropriate means.

Since the cooling medium supply device 27 supplies a mist-like cooling medium to a cooling medium flow channel 37 which is formed inside of the rolling roll 5a, the rolling roll 5a which is subjected to the induction heating by the induction heating coil 25 is cooled.

In the example of Fig. 5, the cooling medium supply device 27 includes an air source 27a, a cooling medium source 27b, and a nozzle portion 27c. The air source 27a supplies pressurized air (gas) to the nozzle portion 27c. The cooling medium source 27b supplies the cooling medium which is liquid (preferably, water) to the nozzle portion 27c. The nozzle portion 27c sprays the supplied cooling medium using the supplied pressurized air to the cooling medium flow channel 37 side (to a communication passage 36 in the example of Fig. 5), and therefore, the mist-like cooling medium is supplied to the cooling medium flow channel 37. In the example of Fig. 5, the nozzle portion 27c supplies the mist-like cooling medium to the cooling medium flow channel 37 through the communication passage 36 which is formed inside of the extension portion 35. Thereby, the mist-like cooling medium is supplied to the cooling medium flow channel 37. The mist-like cooling medium which is supplied to the cooling medium flow channel 37 passes through the cooling medium flow channel 37, and therefore, cools the rolling roll 5a. Thereafter, the cooling medium is discharged outside the rolling roll 5a through a discharge flow channel 39 which is formed inside of the rolling roll 5a and the extension portion 35. The discharge flow channel 39 communicates with a cooling medium flow channel 37.

In this example, as illustrated in Fig. 6, the shape of the cooling medium flow channel 37 when viewed from the axial direction of the rolling roll 5a is an arc shape, and the cooling medium flow channel is formed in four arc-shaped flow channels which have gaps therebetween in the circumferential direction. The arc shaped flow channels each extend in the axial direction of the rolling roll 5a. The mist-like cooling medium is supplied to each of the arc shaped flow channels from the communication passage 36, and the cooling medium flows to the discharge flow channel 39 after flowing to each of the arc shaped flow channels in the axial direction of the rolling roll 5a. In the example of Fig. 5, the discharge flow channel 39 is disposed further toward center axis Ca side than the cooling medium flow channel 37 and extends in the axial direction of the rolling roll 5a.

The nozzle portion 27c is formed in a space inside of the columnar extension portion 35 which is connected to the rolling roll 5a. The pressurized air is supplied from the air source 27a to the nozzle portion 27c through an air supply tube 41, an air supply passage 43, and an air introduction passage 45. The air supply tube 41 extends from the air source 27a and supplies the pressurized air from the air source 27a to the air supply passage 43. The air supply passage 43 is formed inside of a stationary side member 44 which rotatably supports the extension portion 35 and supplies the supplied pressurized air to the air introduction passage 45. The air introduction passage 45 is formed in an annular shape when viewed from the axial direction of the rolling roll 5a inside of the extension portion 35 and is opened to the outer circumferential surface of the extension portion 35. Therefore, the air introduction passage 45 receives the pressurized air from the air supply passage 43. The air introduction passage 45 introduces the pressurized air which is received from the air supply passage 43 to the nozzle portion 27c.

In addition, in Fig. 5, a plurality of seal rings 47 which is annular when viewed from the axial direction is provided on the outer circumferential surface of the extension portion 35. By the seal rings 47, the pressurized air is prevented from being leaked from a communication portion of the air supply passage 43 and the air introduction passage 45 to the outside.

Similarly, the liquid cooling medium is supplied from the cooling medium source 27b to the nozzle portion 27c through a cooling medium supply tube 49, a cooling medium supply passage 51, and a cooling medium introduction passage 53. The cooling medium supply tube 49 extends from the cooling medium source 27b and supplies the cooling medium from the cooling medium source 27b to the cooling medium supply passage 51. The cooling medium supply passage 51 is formed inside of the stationary side member 44 and supplies the supplied cooling medium to the cooling medium introduction passage 53. The cooling medium introduction passage 53 is formed in an annular shape when viewed from the axial direction of the rolling roll 5a inside of the extension portion 35 and is opened to the outer circumferential surface of the extension portion 35. Therefore, the cooling medium introduction passage 53 receives the cooling medium from the cooling medium supply passage 51. The cooling medium introduction passage 53 introduces the cooling medium which is received from the cooling medium supply passage 51 to the nozzle portion 27c.

In addition, in Fig. 5, the seal rings 47 which is annular when viewed from the axial direction is provided on the outer circumferential surface of the extension portion 35. Through the seal rings 47, the cooling medium is prevented from being leaked from a communication portion of the cooling medium supply passage 51 and the cooling medium introduction passage 53 to the outside.

The temperature sensor 29 detects the temperature of the rolling roll 5a. In the example of Fig. 5, the temperature sensor 29 is assembled to the rolling roll 5a. In order to transmit a temperature detection signal (voltage signal) from the temperature sensor 29 which is positioned at the rotating side to the control device 31 of the stationary side in a non-contact manner, the rotary transformer 55 is provided as illustrated in Fig. 5. The rotary transformer 55 includes a stator coil 55a which is positioned on the stationary side and a rotor coil 55b which is positioned on the rotating side, and by operation of a magnetic field between the stator coil 55a and the rotor coil 55b, the temperature detection signal (voltage signal) is transmitted from the temperature sensor 29 of the rotating side to the control device 31 of the stationary side.

The control device 31 controls the cooling medium which is supplied to the cooling medium flow channel 37 by the cooling medium supply device 27 based on the temperature detected by the temperature sensor 29 so that the temperature of the rolling roll 5a is less than or equal to a set upper limit temperature (for example, 250°C). The control device 31 may perform the supply control of the cooling medium to the cooling medium flow channel 37 by the cooling medium supply device 27 by controlling an opening of flow controlling valves 57 and 59. The flow controlling valve 57 is provided on the cooling medium supply tube 49, and the flow controlling valve 59 is provided on the air supply tube 41.

For example, the control device 31 may perform the above-described control according to the following control methods A1, A2, or A3.

### (Control Method A1)

If the temperature detected by the temperature sensor 29 reaches the set upper limit temperature, the control device 31 controls the cooling medium supply device 27 so that the cooling medium supply device 27 supplies the cooling medium to the cooling medium flow channel 37. In this case, if the temperature detected by the temperature sensor 29 reaches the set upper limit temperature, the control device 31 opens the flow controlling valves 57 and 59, and the cooling medium supply device 27 may supply the mist-like cooling medium to the cooling medium flow channel 37. Thereby, the temperature of the rolling roll 5a is suppressed so as to be less than or equal to the set upper limit temperature (for example, 250°C). The induction heating coil 25 may perform the induction heating of the rolling roll 5a while the control is performed.

### (Control Method A2)

The control device 31 controls an amount of the mist-like cooling medium which is supplied to the cooling medium flow channel 37 based on the temperature detected by the temperature sensor 29 and a set temperature range (for example, 200°C to 250°C). Thereby, the temperature of the rolling roll 5a is suppressed so as to be less than or equal to the set upper limit temperature (for example, 250°C), and the temperature of the rolling roll 5a is maintained within the set temperature range. In this case, in the example of Fig. 4, the control device 31 controls the amount of the mist-like cooling medium which is supplied to the cooling medium flow channel 37 by controlling the opening of the flow controlling valve 57. Alternatively, the control device 31 may control the amount of the mist-like cooling medium which is supplied to the cooling medium flow channel 37 by controlling not only the opening of the flow controlling valve 57 but also the opening of the flow controlling valve 59. The induction heating coil 25 may perform the induction heating of the rolling roll 5a while the control is performed.

### (Control Method A3)

The control device 31 may control an amount of electric power which is supplied to the induction heating coil 25 from the power supply 34 not only by controlling the amount of the mist-like cooling medium supplied to the cooling medium flow channel 37 but also by controlling a supply electric power controlling portion 32 based on the temperature detected by the temperature sensor 29 and the set temperature range. Thereby, the temperature of the rolling roll 5a is easily maintained within the set temperature range. In the control method A3, the control of the amount of the mist-like cooling medium which is supplied to the cooling medium flow channel 37 is performed by controlling the opening of the flow controlling valve 57 or the openings of the flow controlling valves 57 and 59.

According to the above-described induction heating roll device, the size of the device for heating the rolling roll 5a is able to be decreased compared to the related art as described below.

In the related art, in order to heat the rolling rolls, a heating medium such as oil or soft water is heated and supplied to inside of the rolling rolls. In this case, the temperature control of the rolling rolls is performed by controlling the heating through the temperature controller which heats the heating medium. However, the size of the calender is increased when the temperature controller is provided.

On the other hand, in the present embodiment, since the temperature controller is not provided and the induction heating coil 25 is provided inside of the rolling roll 5a, the size of the calender is able to be decreased.

Moreover, since the induction heating roll device is applied to the rolling roll 5a, the following effects (1) to (6) are obtained.
(1) In the related art, the induction heating coil 25 is not used in the heating of the rolling roll 5a in the calender. The reason is because it is difficult to control the temperature of the rolling roll 5a within the set temperature range since the induction heating coil 25 does not have a cooling function although the resin material is rolled and heated on the rolling roll 5a. On the other hand, in the prevent embodiment, the temperature control of the rolling roll 5a is able to be performed by supplying the cooling medium.
(2) Through the induction heating, the rolling roll 5a is able to be rapidly heated. For example, in the temperature controller of the related art, the temperature of the rolling roll 5a is increased to only about 40 °C/hr. However, in the present embodiment, the temperature of the rolling roll 5a is able to be increased to about 200 °C/hr.
(3) If the cooling medium in the state of mist is supplied to inside of the rolling roll 5a, the cooling medium is easily evaporated in the high-temperature rolling roll 5a. Accordingly, since the heat of the rolling roll 5a is able to be converted to heat of vaporization of the cooling medium, the rolling roll 5a is able to be rapidly cooled.
(4) Since the heat of the rolling roll 5a is converted to the heat of vaporization of the cooling medium, the rolling roll 5a is able to be cooled by a small amount of the cooling medium. As a result, the used amount of the cooling medium is able to be suppressed.
(5) Since the induction heating coil 25 is heated without contamination of air and water of a small amount having a low probability of air contamination is able to be used as the cooling medium, the calender is able to be used even in a clean room.
(6) In Fig. 5, in the radial direction of the rolling roll 5a, the induction heating coil 25 is positioned on the center axis Ca side of the rolling roll 5a, and the cooling medium flow channel 37 is positioned on the outer circumferential surface side of the rolling roll 5a. Thereby, the outer circumferential surface of the rolling roll 5a is able to be more rapidly cooled.

### (Frame Structure)

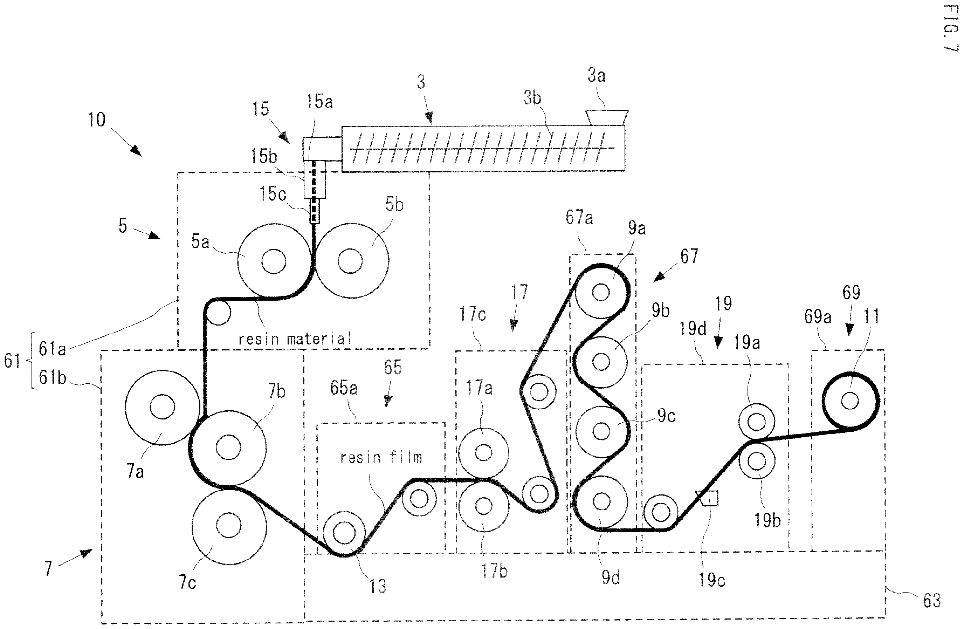

Fig. 7 illustrates a frame structure of the calender 10 according to the present embodiment. In Fig. 7, each frame is schematically illustrated by a dotted line.

As illustrated in Fig. 7, the calender 10 includes a first frame 61 and a second frame 63.

The first frame 61 includes an upper-step frame portion 61a and a lower-step frame portion 61b. The first frame 61 may be divided into the upper-step frame portion 61a and the lower-step frame portion 61b.

The upper-step frame portion 61a is a component of the first roll unit 5. The upper-step frame portion 61a rotatably supports the rolling rolls 5a and 5b. Moreover, the extrusion unit 3 may be mounted to the upper-step frame portion 61a.

The lower-step frame portion 61b is a component of the second roll unit 7. The lower-step frame portion 61b rotatably supports the rolling rolls 7a, 7b, and 7c.

The second frame 63 is provided at the lower step of the further rear side (right side in Fig. 7) than the lower-step frame portion 61b.

A take-off roll unit 65, a cooling roll unit 67, a winding roll unit 69, an embossing unit 17, and a trimming unit 19 are mounted to the second frame 63.

The take-off roll unit 65 includes the take-off roll 13 and a frame portion 65a which rotatably supports the take-off roll 13. The frame portion 65a is mounted to the second frame 63.

The cooling roll unit 67 includes the plurality of cooling rolls 9a, 9b, 9c, and 9d and a frame portion 67a which rotatably supports the cooling rolls 9a, 9b, 9c, and 9d. The frame portion 67a is mounted to the second frame 63.

The winding roll unit 69 includes the winding roll 11 and a frame portion 69a which rotatably supports the winding roll 11. The frame portion 69a is mounted to the second frame 63.

The embossing unit 17 includes a frame portion 17c which rotatably supports the embossing rolls 17a and 17b. The frame portion 17c is mounted to the second frame 63.

The trimming unit 19 includes a frame portion 19d which rotatably supports the pinch rolls 19a and 19b. The cutter 19c is mounted to the frame portion 19d. The frame portion 19d is mounted to the second frame 63.

The frame portions 65a, 67a, 69a, 17c, and 19d each may be detachably mounted with respect to the second frame 63.

The following modifications 1, 2, and 3 may be arbitrarily combined or adopted singly.

### [Modification 1]

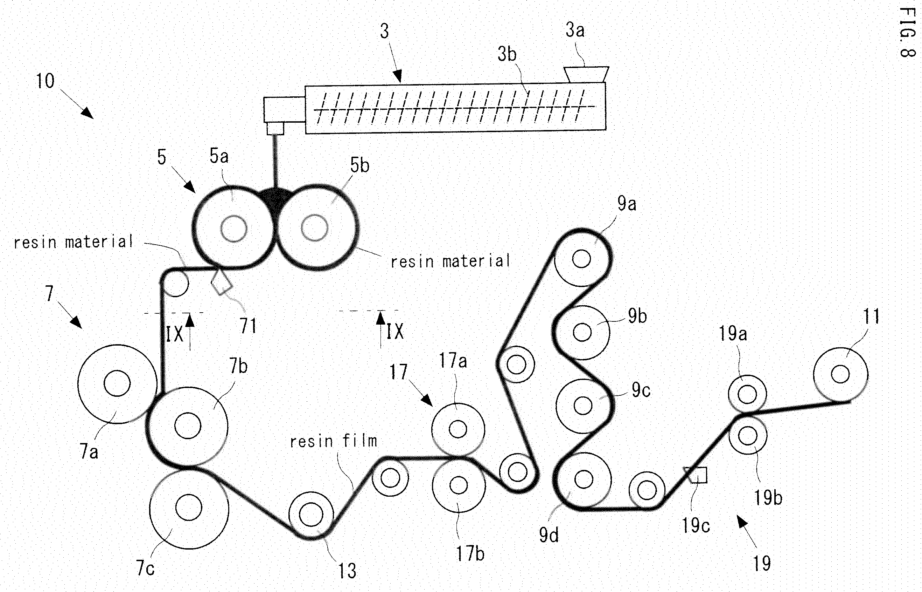

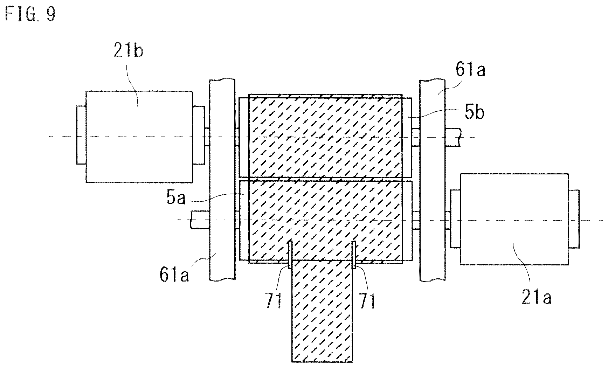

Fig. 8 illustrates a modification of the calender 10. Fig. 9 is a view when viewed from an arrow IX-IX of Fig. 8.

The first roll unit 5 may knead and mix a resin material including a plurality of kinds of resins instead of rolling the resin material. In this case, as illustrated in Fig. 8, the above-described molding portion 15 is omitted, and the first roll unit 5 includes the first and second mixing roll 5a and 5b which are driven to rotate.

The resin material supplied from the extrusion unit 3 is attached on the outer circumferential surface of each of the mixing rolls 5a and 5b. The attached resin material passes between the mixing rolls 5a and 5b while rotating according to the rotation of the mixing rolls 5a and 5b, is pressurized and kneaded between the mixing rolls 5a and 5b, and is mixed during this process. As illustrated in Fig. 9, the resin material which is attached to the mixing rolls 5a and 5b is cut from the mixing rolls 5a and 5b by a pair of cutters 71, and the cut resin material is transferred to the second roll unit 7.

Moreover, in the case of Fig. 8, other points are similar to the above-described those. For example, the other points are similar to the above-described those as follows.

The above-described configuration 1 may be adopted by the mixing rolls 5a and 5b. That is, the motors 21a and 21b which are driven to rotate the mixing rolls 5a and 5b in the axial direction of the mixing rolls may be directly connected to the mixing rolls 5a and 5b. The motor 21a which is directly connected to the mixing roll 5a and the motor 21b which is directly connected to the mixing roll 5b are positioned on the sides opposite to each other relative to the mixing rolls 5a and 5b in the axial directions of the mixing rolls 5a and 5b.

In addition, the above-described configuration 2 may be adopted by one or both of the mixing rolls 5a and 5b. That is, the induction heating roll device may be applied to one or both of the mixing rolls 5a and 5b.

The mixing rolls 5a and 5b may be rotatably supported to the upper-step frame portion 61a.

### [Modification 2]

The cooling medium supply device 27 supplies a cooling medium of liquid other than the mist instead of the mist-like cooling medium to the cooling medium flow channel 37, and therefore, the rolling roll 5a which is subjected to the induction heating by the induction heating coil 25 may be cooled. In this case, in Fig. 5, the air source 27a, the air supply tube 41, the air supply passage 43, the air introduction passage 45, and the flow controlling valve 59 are omitted, and the nozzle portion 27c may be a simple space which communicates with the communication passage 36.

The control device 31 controls the liquid cooling medium which is supplied to the cooling medium flow channel 37 by the cooling medium supply device 27 based on the temperature detected by the temperature sensor 29 so that the temperature of the rolling roll 5a is less than or equal to a set upper limit temperature (for example, 250°C).

For example, the control device 31 may perform the control according to the following control method B1, B2, or B3.

### (Control Method B1)

If the temperature detected by the temperature sensor 29 reaches the set upper limit temperature, the control device 31 controls the cooling medium supply device 27 so that the cooling medium supply device 27 supplies the liquid cooling medium to the cooling medium flow channel 37. In this case, if the temperature detected by the temperature sensor 29 reaches the set upper limit temperature, the control device 31 opens the flow controlling valve 57, and the cooling medium supply device 27 may supply the cooling medium to the cooling medium flow channel 37. Thereby, the temperature of the rolling roll 5a is suppressed so as to be less than or equal to the set upper limit temperature (for example, 250°C). The induction heating coil 25 may perform the induction heating of the rolling roll 5a while the control is performed.

### (Control Method B2)

The control device 31 controls an amount of the liquid cooling medium which is supplied to the cooling medium flow channel 37 based on the temperature detected by the temperature sensor 29 and a set temperature range (for example, 200°C to 250°C). Thereby, the temperature of the rolling roll 5a is suppressed so as to be less than or equal to the set upper limit temperature (for example, 250°C), and the temperature of the rolling roll 5a is maintained within the set temperature range. In this case, the control device 31 controls the amount of the cooling medium which is supplied to the cooling medium flow channel 37 by controlling the opening of the flow controlling valve 57. The induction heating coil 25 may perform the induction heating of the rolling roll 5a while the control is performed.

### (Control Method B3)

The control device 31 may control the amount of the electric power which is supplied to the induction heating coil 25 from the power supply 34 not only by controlling the amount of the liquid cooling medium supplied to the cooling medium flow channel 37 but also by controlling the supply electric power controlling portion 32 based on the temperature detected by the temperature sensor 29 and the set temperature range. Thereby, the temperature of the rolling roll 5a is easily maintained within the set temperature range. In the control method B3, the control of the amount of the cooling medium which is supplied to the cooling medium flow channel 37 is performed by controlling the opening of the flow controlling valve 57.

In the modification 2, other points are the same as the above-described those.

### [Modification 3]

If the second roll unit 7 is positioned further forward than the first roll unit 5, the first roll unit 5 may not partially overlap with the second roll unit 7 in the up and down directions.

### Description of Reference Numerals

- 3:: extrusion unit
- 3a:: material supply port
- 3b:: screw
- 5:: first roll unit
- 5a: and 5b: rolling roll or mixing roll
- 7:: second roll unit
- 7a, 7b, and 7c:: rolling roll
- 9a, 9b, 9c, and 9d:: cooling roll
- 10:: calender
- 11:: winding roll
- 13:: take-off roll

## Claims

1. A calender (10) which forms a resin film from a resin material, comprising:
an extrusion unit (3) for kneading and extruding the resin material transferred from a rear side to a front side;
a first roll unit (5) for pressurizing the extruded resin material; and
a second roll unit (7) for rolling the resin material transferred to the second roll unit (7) from the first roll unit (5), the second roll unit (7) is positioned further forward than the first roll unit (5) with respect to said direction of transfer of the resin material inside the extrusion unit (3), wherein the first roll unit (5) is positioned further upward than the second roll unit (7) with respect to a vertical direction;
a take-off roll (13) which is provided at a rear side of the second roll unit (7) and separates the resin film from the second roll unit (7);
and wherein the calendar (10) further comprises a plurality of cooling rolls (9a, 9b, 9c, 9d) which are adapted to be cooled by a cooling medium flowing inside of the cooling rolls (9a, 9b, 9c, 9d) and for cooling the resin film by contacting the resin film transferred from the take-off roll, the plurality of cooling rolls (9a, 9b, 9c, 9d) are disposed from an upper step side to a lower step side in a rear side of the take-off roll (13); and
a winding roll (11) which is provided at a rear side of the plurality of cooling rolls (9a, 9b, 9c, 9d) or winding the resin film passing through the plurality of cooling rolls (9a, 9b, 9c, 9d).

2. The calender according to claim 1,
wherein the extrusion unit (3) includes a material supply port (3a) to which the resin material is supplied,
the extrusion unit (3) is disposed above the first roll unit (5), and
the resin material is kneaded by the extrusion unit (3) after being supplied to the material supply port (3a), subsequently, the resin material is pressurized by the first roll unit (5), thereafter, the resin material is rolled by the second roll unit (7), to the resin film, and is transferred to the rear side.

3. The calender according to claim 2, wherein the first roll unit (5) and the second roll unit (7) partially overlap with each other in up and down direction.

4. The calender according to any one of claims 1 to 3, further comprising:
an embossing unit (17) including a pair of embossing rolls (17a, 17b) which are driven to rotate, which comprise a pattern having unevenness which is formed on at least one outer circumferential surface of the embossing rolls and which are adapted to imprint a pattern of the embossing rolls (17a, 17b) to the resin film;
a trimming unit (19) including a pair of pinch rolls (19a, 19b) and a cutter (19c) wherein the pinch rolls are adapted to apply tension to the resin film when the resin film is interposed between the pair of pinch rolls, and wherein the cutter is adapted to cut ends of the resin film in the width direction while the tension is applied by the pinch rolls to the resin film.

5. The calender according to claim 4, further comprising:
a first frame (61) and a second frame (63);
the first frame (61) includes an upper-step frame portion (61a) and a lower-step frame portion (61b),
the upper-step frame portion (61a) rotatably supports the first roll unit (5) and the lower-step frame portion (61b) rotatably supports the second roll unit (7);
the second frame (63) is provided at a rear side of the lower-step frame portion (61b);
a take-off roll unit including the take-off roll (13), a cooling roll unit (67) including the plurality of cooling rolls (9a, 9b, 9c, 9d), a winding roll unit (6) including the winding roll (11), the embossing unit (17) and the trimming unit (19) are mounted to the second frame (63);
a take-off roll frame portion (65a) rotatably supports the take-off roll (13) and mounted to the second frame (63);
a cooling roll frame portion (67a) rotatably supports the cooling rolls (9a, 9b, 9c, 9d) and mounted to the second frame (63);
a winding roll frame portion (69a) rotatably supports the winding roll (11) and mounted to the second frame (63);
an embossing roll frame portion (17c) rotatably supports the embossing rolls (17a, 17b) and mounted to the second frame (63);
a trimming roll frame portion (19d) rotatably supports the pinch rolls (19a, 19b) and mounted to the second frame (63), the cutter (19c) is mounted to the trimming roll frame portion (19d).

6. The calender according to claim 5, wherein each of the take-off roll frame portion (65a), the cooling roll frame portion (67a), the winding roll frame portion (69a), the embossing roll frame portion (17c), and the trimming roll frame portion (19d) is detachably mounted with respect to the second frame (63).

## Patentansprüche

1. Kalander (10), der eine Kunststofffolie aus einem Kunststoffmaterial herstellt, wobei er umfasst:
eine Extrusions-Einheit (3) zum Kneten und Extrudieren des von einer hinteren Seite zu einer vorderen Seite transportierten Kunststoffmaterials;
eine erste Walzen-Einheit (5), mit der das extrudierte Kunststoffmaterial gepresst wird; sowie
eine zweite Walzen-Einheit (7), mit der das von der ersten Walzen-Einheit (5) zu der zweiten Walzen-Einheit (7) transportierte Kunststoffmaterial gewalzt wird, wobei die zweite Walzen-Einheit (7) in Bezug auf die Transportrichtung des Kunststoffmaterials im Inneren der Extrusions-Einheit (3) weiter vorn positioniert ist als die erste Walzen-Einheit (5) und die erste Walzen-Einheit (5) in Bezug auf eine vertikale Richtung weiter oben positioniert ist als die zweite Walzen-Einheit (7);
eine Abwickelwalze (13), die sich an einer hinteren Seite der zweiten Walzen-Einheit (7) befindet und die Kunststofffolie von der zweiten Walzen-Einheit (7) trennt;
und wobei der Kalander (10) des Weiteren umfasst:
eine Vielzahl von Kühlwalzen (9a, 9b, 9c, 9d), die so eingerichtet sind, dass sie mit einem Kühlmittel gekühlt werden, das im Inneren der Kühlwalzen (9a, 9b, 9c, 9d) fließt, und den Kunststofffilm kühlen, indem sie mit dem von der Abwickelwalze transportierten Kunststofffilm in Kontakt kommen, wobei die Vielzahl von Kühlwalzen (9a, 9b, 9c, 9d) von der Seite einer oberen Stufe zu der Seite einer unteren Stufe an einer hinteren Seite der Abwickelwalze (13) angeordnet sind;
eine Aufwickelwalze (11), die sich an einer hinteren Seite der Vielzahl von Kühlwalzen (9a, 9b, 9c, 9d) befindet, um die die Vielzahl von Kühlwalzen (9a, 9b, 9c, 9d) durchlaufende Kunststofffolie aufzuwickeln.

2. Kalander nach Anspruch 1,
wobei die Extrusions-Einheit (3) einen Materialzuführ-Trichter (3a) enthält, dem das Kunststoffmaterial zugeführt wird,
die Extrusions-Einheit (3) oberhalb der ersten Walzen-Einheit (5) angeordnet ist, und
das Kunststoffmaterial durch die Extrusions-Einheit (3) geknetet wird, nachdem es dem Materialzuführ-Trichter (3a) zugeführt wurde, das Kunststoffmaterial anschließend durch die erste Walzen-Einheit (5) gepresst wird und danach das Kunststoffmaterial durch die zweite Walzen-Einheit (7) zu dem Kunststofffilm gewalzt wird und zu der hinteren Seite transportiert wird.

3. Kalander nach Anspruch 2, wobei die erste Walzen-Einheit (5) und die zweite Walzen-Einheit (7) in der vertikalen Richtung einander teilweise überlappen.

4. Kalander nach einem der Ansprüche 1 bis 3, der des Weiteren umfasst:
eine Präge-Einheit (17), die ein Paar Prägewalzen (17a, 17b) einschließt, die rotierend angetrieben werden, die ein Muster umfassen, das Unebenheit aufweist und an wenigstens einer Außenumfangsfläche der Prägewalzen ausgebildet ist, und die so eingerichtet sind, dass sie ein Muster der Prägewalzen (17a, 17b) auf die Kunststofffolie aufdrucken;
eine Beschneid-Einheit (19), die ein Paar Quetschwalzen (19a, 19b) sowie eine Schneideinrichtung (19c) einschließt, wobei die Quetschwalzen so eingerichtet sind, dass sie Spannung auf die Kunststofffolie ausüben, wenn sich die Kunststofffolie zwischen den paarigen Quetschwalzen befindet, und die Schneideinrichtung so eingerichtet ist, dass sie Enden der Kunststofffolie in der Breitenrichtung schneidet, während die Spannung durch die Quetschwalzen auf die Kunststofffolie ausgeübt wird.

5. Kalander nach Anspruch 4, der des Weiteren umfasst:
ein erstes Gestell (61) und ein zweites Gestell (63);
wobei das erste Gestell (61) einen Gestellabschnitt (61a) der oberen Stufe und einen Gestellabschnitt (61b) der unteren Stufe einschließt,
der Gestellabschnitt (61a) der oberen Stufe die erste Walzen-Einheit (5) drehbar trägt und der Gestellabschnitt (61b) der unteren Stufe die zweite Walzen-Einheit (7) drehbar trägt;
das zweite Gestell (63) sich an einer hinteren Seite des Gestellabschnitts (61b) der unteren Stufe befindet;
eine Abwickelwalzen-Einheit, die die Abwickelwalze (13) enthält, eine Kühlwalzen-Einheit (67), die die Vielzahl von Kühlwalzen (9a, 9b, 9c, 9d) enthält, eine Aufwickelwalzen-Einheit (6), die die Aufwickelwalze (11) enthält, die Präge-Einheit (17) und die Beschneid-Einheit (19) an dem zweiten Gestell (63) angebracht sind;
ein Abwickelwalzen-Gestellabschnitt (65a) die Abwickelwalze (13) drehbar trägt und an dem zweiten Gestell (63) angebracht ist;
ein Kühlwalzen-Gestellabschnitt (67a) die Kühlwalzen (9a, 9b, 9c, 9d) drehbar trägt und an dem zweiten Gestell (63) angebracht ist;
ein Aufwickelwalzen-Gestellabschnitt (69a) die Aufwickelwalze (11) drehbar trägt und an dem zweiten Gestell (63) angebracht ist;
ein Prägewalzen-Gestellabschnitt (17c) die Prägewalzen (17a, 17b) drehbar trägt und an dem zweiten Gestell (63) angebracht ist;
ein Beschneidwalzen-Gestellabschnitt (19d) die Quetschwalzen (19a, 19b) drehbar trägt und an dem zweiten Gestell (63) angebracht ist, wobei die Schneideinrichtung (19c) an dem Beschneidwalzen-Gestellabschnitt (19d) angebracht ist.

6. Kalander nach Anspruch 5, wobei der Abwickelwalzen-Gestellabschnitt (65a), der Kühlwalzen-Gestellabschnitt (67a), der Aufwickelwalzen-Gestellabschnitt (69a), der Prägewalzen-Gestellabschnitt (17c) und der Beschneidwalzen-Gestellabschnitt (19d) jeweils abnehmbar an dem zweiten Gestell (63) angebracht sind.

## Revendications

1. Calandre (10) qui forme un film de résine à partir d'un matériau résineux, comprenant :
une unité d'extrusion (3) pour malaxer et extruder le matériau résineux transféré d'un côté arrière à un côté avant ;
une première unité de rouleau (5) pour pressuriser le matériau résineux extrudé ; et
une deuxième unité de rouleau (7) pour rouler le matériau résineux transféré à la deuxième unité de rouleau (7) depuis la première unité de rouleau (5), la deuxième unité de rouleau (7) est positionnée plus en avant que la première unité de rouleau (5) par rapport à ladite direction de transfert du matériau résineux dans l'unité d'extrusion (3), dans laquelle la première unité de rouleau (5) est positionnée plus haut que la deuxième unité de rouleau (7) par rapport à une direction verticale ;
un rouleau de détachage (13) qui est pourvu sur un côté arrière de la deuxième unité de rouleau (7) et qui sépare le film de résine de la deuxième unité de rouleau (7) ;
et dans laquelle la calandre (10) comprend en outre une pluralité de rouleaux de refroidissement (9a, 9b, 9c, 9d) qui sont adaptés pour être refroidis par un milieu de refroidissement qui s'écoule à l'intérieur des rouleaux de refroidissement (9a, 9b, 9c, 9d) et pour refroidir le film de résine par contact avec le film de résine transféré par le rouleau de détachage, les rouleaux de la pluralité de rouleaux de refroidissement (9a, 9b, 9c, 9d) sont disposés depuis un côté d'échelon supérieur à un côté d'échelon inférieur dans un côté arrière du rouleau de détachage (13) ; et
un rouleau d'enroulement (11) qui est pourvu sur un côté arrière de la pluralité de rouleaux de refroidissement (9a, 9b, 9c, 9d) ou qui enroule le film de résine passant par la pluralité de rouleaux de refroidissement (9a, 9b, 9c, 9d).

2. Calandre selon la revendication 1, dans laquelle
l'unité d'extrusion (3) comprend un orifice d'alimentation de matériau (3a) auquel est alimenté le matériau résineux,
l'unité d'extrusion (3) est disposée au-dessus de la première unité de rouleau (5), et
le matériau résineux est malaxé par l'unité d'extrusion (3) après avoir été alimenté dans l'orifice d'alimentation de matériau (3a), le matériau résineux est ensuite pressurisé par la première unité de rouleau (5), puis le matériau résineux est roulé par la deuxième unité de rouleau (7), vers le film de résine, et est transféré vers le côté arrière.

3. Calandre selon la revendication 2, dans laquelle la première unité de rouleau (5) et la deuxième unité de rouleau (7) se chevauchent partiellement en direction haut-bas.

4. Calandre selon l'une quelconque des revendications 1 à 3, comprenant en outre :
une unité d'emboutissage (17) comprenant une paire de rouleaux d'emboutissage (17a, 17b) qui sont entraînés pour tourner, qui comprennent un motif comportant une irrégularité qui est formée sur au moins une surface circonférentielle externe des rouleaux d'emboutissage et qui sont adaptés pour imprimer un motif des rouleaux d'emboutissage (17a, 17b) sur le film de résine ;
une unité de rognage (19) comprenant une paire de rouleaux de pinçage (19a, 19b) et une lame (19c), dans laquelle les rouleaux de pinçage sont adaptés pour appliquer une tension au film de résine quand le film de résine est interposé entre la paire de rouleaux de pinçage, et dans laquelle la lame est adaptée pour découper les extrémités du film de résine en direction de la largeur alors que la tension est appliquée par les rouleaux de pinçage sur le film de résine.

5. Calandre selon la revendication 4, comprenant en outre :
un premier châssis (61) et un deuxième châssis (63) ;
le premier châssis (61) comprend une portion de châssis d'échelon supérieur (61a) et une portion de châssis d'échelon inférieur (61b),
la portion de châssis d'échelon supérieur (61a) supporte de manière rotative la première unité de rouleau (5) et la portion de châssis d'échelon inférieur (61b) supporte de manière rotative la deuxième unité de rouleau (7) ;
le deuxième châssis (63) est pourvu sur un côté arrière de la portion de châssis d'échelon inférieur (61b) ;
une unité de rouleau de détachage incluant le rouleau de détachage (13), une unité de rouleau de refroidissement (67) incluant la pluralité de rouleaux de refroidissement (9a, 9b, 9c, 9d), une unité de rouleau d'enroulement (6) incluant le rouleau d'enroulement (11), l'unité d'emboutissage (17) et l'unité de rognage (19) sont montées sur le deuxième châssis (63) ;
une portion de châssis de rouleau de détachage (65a) supporte de manière rotative le rouleau de détachage (13) et est montée sur le deuxième châssis (63) ;
une portion de châssis de rouleau de refroidissement (67a) supporte de manière rotative les rouleaux de refroidissement (9a, 9b, 9c, 9d) et est montée sur le deuxième châssis (63) ;
une portion de châssis de rouleau d'enroulement (69a) supporte de manière rotative le rouleau d'enroulement (11) et est montée sur le deuxième châssis (63) ;
une portion de châssis de rouleaux d'emboutissage (17c) supporte de manière rotative les rouleaux d'emboutissage (17a, 17b) et est montée sur le deuxième châssis (63) ;
une portion de châssis de rouleau de rognage (19d) supporte de manière rotative les rouleaux de pinçage (19a, 19b) et est montée sur le deuxième châssis (63), et la lame (19c) est montée sur la portion de châssis de rouleau de rognage (19d).

6. Calandre selon la revendication 5, dans laquelle chaque portion parmi la portion de châssis de rouleau de détachage (65a), la portion de châssis de rouleau de refroidissement (67a), la portion de châssis de rouleau d'enroulement (69a), la portion de châssis de rouleau d'emboutissage (17c), et la portion de châssis de rouleau de rognage (19d) est montée de manière détachable sur le deuxième châssis (63).
